# EUROPÄISCHE PATENTANMELDUNG

(11) **EP 0 947 815 A1**
(43) Veröffentlichungstag der Anmeldung: **06.10.1999**
(21) Anmeldenummer: 98810282.8
(22) Anmeldetag: 01.04.1998
(51) Int. Cl.: G01L 9/00

(54) **Differentieller Druckmessumformer**

(71) Anmelder: Haenni & Cie. AG, 3303 Jegenstorf (CH)
(72) Erfinder: Dutoit, Bertrand, 1025St. Sulpice (CH); Friedrich, Andreas, 1024 Ecublens (CH); Hug, Kurt, 2525 Le Landeron (CH); Popovic, Radivoje, 1025 St. Sulpice (CH)
(74) Vertreter: Roshardt, Werner Alfred, Dipl.-Phys.

(57) **Zusammenfassung**

Ein differentieller Druckmessumformer (100; 200; 300; 400) weist eine im wesentlichen mikrotechnische Struktur auf. Die mikrotechnische Struktur umfasst eine durch ein Gehäuse definierte Messkammer, die durch eine mit Magnetmitteln (160; 260; 360; 460) versehene Messmembran (150; 250; 350; 450) in einen mit einem ersten Messdruck beaufschlagbaren ersten Messraum (111; 211; 311; 411) und einen mit einem zweiten Messdruck beaufschlagbaren zweiten Messraum (112; 212; 312; 412) unterteilt ist, wobei die Messmembran (150; 250; 350; 450) derart angeordnet ist, dass eine Druckkraft des sich aus dem ersten Messdruck und dem zweiten Messdruck ergebenden Differenzdruckes eine Auslenkung der Messmembran (150; 250; 350; 450) aus ihrer Ruhelage bewirkt. Die mikrotechnische Struktur des Druckmessumformers (100; 200; 300; 400) umfasst weiter eine am Gehäuse angeordnete Spule (121; 221; 321; 421) aus stromleitendem Material, die mittels magnetischer Kraft mit den Magnetmitteln (160; 260; 360; 460) zusammenwirkt, um eine zwischen dem Gehäuse und der Messmembran (150; 250; 350; 450) wirkende Kraft zu erzeugen. Weiter umfasst die mikrotechnische Struktur eine Auslenkungssensoreinrichtung zum Messen einer Auslenkung der Messmembran (150; 250; 350; 450) aus ihrer Ruhelage und zum Erzeugen eines Auslenkungssignals in Abhängigkeit dieser Auslenkung, und eine elektrische Schaltungsvorrichtung zur Erzeugung eines Spulenstroms in Abhängigkeit des Auslenkungssignals derart, dass die über die Spule (121; 221; 321; 421) und die Magnetmittel (160; 260; 360; 460) auf die Messmembran (150; 250; 350; 450) wirkende Kraft die auf die Messmembran (150; 250; 350; 450) wirkende Druckkraft im wesentlichen kompensiert. Der Spulenstrom zur Erzeugung der magnetischen Kompensationskraft stellt ein Mass für den Differenzdruck dar und wird als Ausgangsgrösse des Druckmessumformers (100; 200; 300; 400) ausgegeben. Der erfindungsgemässe differentielle Druckmessumformer (100; 200; 300; 400) weist eine einfache Konstruktion auf, ist kostengünstig in der Herstellung in Grossserie, gewährleistet eine lange Lebensdauer und ist in bezüglich Korrosion und Temperatur rauhen Umgebungsbedingungen einsetzbar.

## Beschreibung

### Technisches Gebiet

Die vorliegende Erfindung betrifft einen differentiellen Druckmessumformer, der insbesondere zur Messung des Differenzdruckes in einer rauhen industriellen Umgebung geeignet ist.

### Stand der Technik

Unter einem differentiellen Druckmessumformer wird eine Messeinrichtung zur Messung des Differenzdruckes verstanden.

Differentielle Druckmessumformer werden z.B. in der chemischen Industrie, der Lebensmittelindustrie, der Luftfahrtindustrie, bei Wasseraufbereitungsanlagen usw. zum Zwecke u.a. der Flussmessung bei strömenden Medien, der Steuerung von Filtern, der Geschwindigkeitsmessung bei Luft- oder Wasserfahrzeugen weitverbreitet eingesetzt. Die Notwendigkeit zur präzisen Messung von kleinen Differenzdrücken, typischerweise in der Grössenordnung von 100 mbar, um einen hohen absoluten (üblicherweise statischen) Druck von z.B. 100 bar herum, hat zur Entwicklung von relativ teuren und komplexen Druckmessumformern geführt, da diese Geräte einerseits ihre Funktionstüchtigkeit bei der Überführung vom Umgebungsdruck zum hohen absoluten Betriebsdruck bewahren müssen und andrerseits sensitiv genug sein müssen, um die kleinen Differenzdrücke mit der gewünschten Genauigkeit messen zu können.

Aus WO 96/41141 ist ein Druckmessumformer bekannt, bei dem eine Messmembran aus elektrisch leitendem Material wie z.B. Stahl eine Messkammer in zwei Messräume unterteilt. Die Membran ist mit den einen Differenzdruck ergebenden Messdrücken in den beiden Messkammern beaufschlagbar und wird durch den Differenzdruck aus ihrer Ruhelage ausgelenkt. In einer der Membran gegenüberliegenden Messkammerwandung ist eine Spule angeordnet. Über eine Induktivitätsmessung werden Relativbewegungen zwischen der Spule und der Membran gemessen.

Bei Druckmessumformern dieser Art besteht ein Problem darin, dass - aufgrund der nur in einem engen Bereich linearen Elastizität der Messmembran - besonders bei grösseren Auslenkungen der Messmembran nicht mehr ein linearer Zusammenhang zwischen der Änderung des Differenzdruckes und der entsprechenden Änderung der Induktivität gegeben ist. Des weiteren besteht die Gefahr inelastischer Deformationen der Membran, welche die Messresultate auf Dauer verfälschen, wodurch die Langzeittauglichkeit des Druckmessumformers nicht gewährleistet ist. Zusätzlich können Temperaturveränderungen und/oder Korrosion die Materialeigenschaften der Membran wesentlich verändern, was zu weiteren Messfehlern führen kann.

In DE-A1-31 06 835 wird eine Differenzdruck-Messeinrichtung dargestellt, die eine durch eine Messmembran in zwei Messräume unterteilte Messkammer aufweist. Die Messkammer ist nach aussen mittels Trennmembranen hermetisch gegen das Medium hin abgeschlossen, in welchem der Differenzdruck zu messen ist. Zur Übertragung des zu messenden Differenzdruckes von den Trennmembranen auf die Messmembran sind die beiden Messräume zwischen der Messmembran und der jeweiligen Trennmembran mit Öl gefüllt. Die Messmembran weist in ihrer Mitte einen Halbleitersensor auf, mit welchem die Auslenkung der Messmembran aus ihrer Ruhelage gemessen wird. Zur Verhinderung von mechanischen Überbeanspruchungen des Halbleitersensors ist eine Kompensationsvorrichtung vorhanden, die über eine mechanische Verbindung mit dem Halbleitersensor und somit der Messmembran gekoppelt ist, um der durch den Differenzdruck bewirkten Auslenkung entgegenzuwirken. Bei der Differenzdruck-Messeinrichtung gemäss dieser Patentschrift ist zwar das Problem der mechanischen Überbelastung der Messmembran vermindert. Die Vorrichtung weist jedoch einen komplizierten und teuren Aufbau auf, und die Geschwindigkeit der Druckmessung ist aufgrund der mechanischen Verbindung zwischen der Kompensationsvorrichtung und der Messmembran nicht besonders gross. Weil die bisher bekannten differentiellen Druckmessumformer konstruktiv aufwendig und somit teuer sind, sind sie für die kostengünstige Herstellung in Grossserien nicht geeignet.

Eine weitere Fehlerquelle bei sämtlichen bekannten Druckmessumformern, die eine Messmembran aufweisen, stellt die Schwerkraft dar. Unter dem Einfluss der Schwerkraft kann die Messmembran bereits aufgrund ihres Eigengewichts deformiert werden, was einen von der Lage des Druckmessumformers abhängigen Fehler bei der Druckmessung zur Folge hat.

### Darstellung der Erfindung

Aufgabe der vorliegenden Erfindung ist die Bereitstellung eines differentiellen Druckmessumformers, der konstruktiv einfach, kostengünstig in Grossserie herstellbar und langlebig ist und selbst in bezüglich Korrosion und Temperatur rauhen Umgebungsbedingungen zuverlässige Druckmessungen ermöglicht.

Die Lösung der Aufgabe ist Gegenstand des unabhängigen Patentanspruchs 1.

Ein erfindungsgemässer differentieller Druckmessumformer weist eine im wesentlichen mikrotechnische Struktur auf. Die mikrotechnische Struktur umfasst eine durch ein Gehäuse definierte Messkammer, die durch eine mit Magnetmitteln versehene Messmembran in einen mit einem ersten Messdruck beaufschlagbaren ersten Messraum und einen mit einem zweiten Messdruck beaufschlagbaren zweiten Messraum unterteilt ist, wobei die Messmembran derart angeordnet ist, dass eine Druckkraft des sich aus dem ersten Messdruck und dem zweiten Messdruck ergebenden Differenzdruckes eine Auslenkung der Messmembran aus ihrer Ruhelage bewirkt. Die mikrotechnische Struktur des Druckmessumformers umfasst weiter eine am Gehäuse angeordnete, stromleitende Spule (d.h., eine Spule aus stromleitendem Material), die mittels magnetischer Kraft mit den Magnetmitteln zusammenwirkt, um eine zwischen dem Gehäuse und der Messmembran wirkende Kraft zu erzeugen. Weiter umfasst die mikrotechnische Struktur eine Auslenkungssensoreinrichtung zum Messen einer Auslenkung der Messmembran aus ihrer Ruhelage und zum Erzeugen eines Auslenkungssignals in Abhängigkeit dieser Auslenkung und eine elektrische Schaltungsvorrichtung zur Erzeugung eines Spulenstroms in Abhängigkeit des Auslenkungssignals derart, dass die über die Spule und die Magnetmittel auf die Messmembran wirkende Magnetkraft die auf die Messmembran wirkende Druckkraft im wesentlichen kompensiert. Der Spulenstrom zur Erzeugung der magnetischen Kompensationskraft stellt ein Mass für den Differenzdruck dar und wird als Ausgangsgrösse des Druckmessumformers ausgegeben.

Unter Mikrotechnik (englisch auch als "microengineering" bezeichnet) werden Mittel und Verfahren verstanden, die dazu dienen, kleinste technische Vorrichtungen oder Geräte zu benützen und/oder (vorzugsweise in Serie) herzustellen. Bei der Mikrotechnik ist der Aspekt der Herstellung, insbesondere der Serienherstellung, genauso wichtig wie derjenige der Funktion eines Gerätes. Dabei bedeutet klein zumindest bei mechanischen und/oder elektromechanischen Vorrichtungen, dass deren Hauptabmessungen im Zentimeter- oder Subzentimeter-Bereich liegen. Mikrotechnische Geräte oder Vorrichtungen sind vorwiegend aus Komponenten aufgebaut, die eine im wesentlichen planartechnologische Struktur aufweisen und mittels Druckverfahren (z.B. Siebdruck bei der Dickfilmtechnik, Aufdampfen bei der Dünnfilmtechnik, UV-Lithografie) herstellbar sind.

Mit "magnetischer Kraft" oder "Magnetkraft" wird die Kraft bezeichnet, die ein elektrischer Leiter oder ein Permanentmagnet in einem Magnetfeld erfährt, und unter "Magnetmittel" sind Mittel aus elektrisch leitendem oder magnetischem Material zu verstehen (und die somit in einem Magnetfeld eine Magnetkraft erfahren können).

Die bisher bekannten differentiellen Druckmessumformer sind für die Herstellung mit Verfahren der Planartechnologie nicht geeignet. Ihre Strukturen sind im wesentlichen dreidimensional und ihre Herstellung ist konstruktiv aufwendig. Demgegenüber sind sämtliche Komponenten des erfindungsgemässen differentiellen Druckmessumformers mit Verfahren und Mittel der Mikrotechnik herstellbar. Dies bietet einerseits die Möglichkeit zu einer kostengünstigen Herstellung des erfindungsgemässen differentiellen Druckmessumformers in Grossserien. Andrerseits bieten sich durch die mikrotechnische Struktur des erfindungsgemässen differentiellen Druckmessumformers hervorragende Möglichkeiten zu dessen Miniaturisierung. Durch die Miniaturisierung des Druckmessumformers können insbesondere die durch die Schwerkraft verursachten Messfehler wesentlich vermindert werden, da ja bekanntlich das Gewicht der Membran mit der dritten Potenz der geometrischen Abmessungen abnimmt. Die Verminderung des Einflusses der Schwerkraft erlaubt sodann die Verwendung von mechanisch weicheren Materialien zur Herstellung der Messmembran. Dadurch wird die Auswahl an für die Herstellung der Messmembran verwendbaren Materialien erheblich vergrössert, so dass nun auch einige chemisch resistente Materialien verwendet werden können, deren Verwendung für die Messmembran von bekannten Druckmessumformern bisher nicht in Frage kam, weil ihre geringe mechanische Festigkeit unter dem Einfluss der Schwerkraft und/oder von grossen Differenzdrücken zu grosse Messfehler verursachten.

Beim erfindungsgemässen differentiellen Druckmessumformer wird zur Messung des Differenzdruckes das Prinzip der Rückkopplung angewendet. Die Druckkraft aufgrund der Druckdifferenz in den Messräumen verursacht eine Auslenkung der Messmembran aus ihrer Ruhelage. Ein Auslenkungssensor misst die Auslenkung der Messmembran aus ihrer Ruhelage, erzeugt ein dieser Auslenkung entsprechendes Auslenkungssignal und speist es in eine elektrische Schaltungsvorrichtung ein. Diese ist elektrisch mit der Spule verbunden und erzeugt einen Spulenstrom derart, dass die Spule mittels magnetischer Kraft mit den Magnetmitteln zusammenwirkt, so dass - aufgrund der Befestigung der Spule am Gehäuse und der Magnetmittel an der Messmembran - insgesamt eine Kraft vom Gehäuse auf die Messmembran ausgeübt wird, welche die auf die Messmembran wirkende Druckkraft im wesentlichen kompensiert, um die Auslenkung der Messmembran aus ihrer Ruhelage rückgängig zu machen. Dies wird wiederum vom Auslenkungssensor gemessen (somit ist die Rückkopplungsschlaufe geschlossen). Als Mass für den Differenzdruck wird der zur Erzeugung der magnetischen Kompensationskraft erforderliche Spulenstrom gemessen, dies im Gegensatz z.B. zu differentiellen Druckmessumformern des in WO 96/41141 beschriebenen Typs, wo im Prinzip die Auslenkung der Messmembran als Mass für den Differenzdruck verwendet wird. Somit werden beim erfindungsgemässen differentiellen Druckmessumformer grosse Auslenkungen der Messmembran vermieden. Daraus ergibt sich der Vorteil, dass beim erfindungsgemässen Druckmessumformer die Messmembran keine hohen Anforderungen in Bezug auf ihre mechanischen Eigenschaften hinsichtlich Elastizität und/oder Linearität zu erfüllen hat. Insbesondere können zur Herstellung der Messmembran auch solche Materialien verwendet werden, die mechanisch weich sind und/oder einen kleinen linearen Elastizitätsbereich aufweisen, dafür aber z.B. besonders widerstandsfähig gegen Korrosion sind. Dadurch entfällt beim erfindungsgemässen Druckmessumformer das Erfordernis, für Anwendungen bei chemisch aggressiven Medien die Messmembran nach der in DE-A1-31 06 835 beschriebenen Art mit Trennmembranen und ölgefüllten Zwischenkammern vom Medium zu isolieren, dessen Druck zu messen ist.

Der erfindungsgemässe differentielle Druckmessumformer stellt insgesamt einen intelligenten Messfühler dar, bei dem die Druckmessung durch eine aktive Kompensation der Auslenkung einer mechanischen Struktur erfolgt, wodurch das Messresultat im wesentlichen unabhängig von den mechanischen Eigenschaften der Struktur wird.

Beim erfindungsgemässen differentiellen Druckmessumformer kann das zu messende Medium in direkten Kontakt mit der Messmembran kommen. Dies ist möglich, weil die Messmembran beim erfindungsgemässen Druckmessumformer aus einem chemisch resistenten Material bestehen kann. Dadurch wird eine vereinfachte Konstruktion im Vergleich zu derjenigen von Druckmessumformern der Art erreicht, wie sie in DE-A1-31 06 835 beschrieben werden, denn das Erfordernis, die Messmembran von dem zu messenden Medium zu isolieren, entfällt.

Vorzugsweise sind das Gehäuse, die Spule, die Magnetmittel und die Messmembran derart ausgebildet, dass die Kraftausübung zwischen dem Gehäuse und der Messmembran berührungsfrei erfolgt, aufgrund magnetischer Fernwirkung zwischen der Spule und den Magnetmitteln. Diese Ausführungsart der Erfindung ermöglicht eine rasche Regelung der die Druckkraft kompensierenden Gegenkraft.

Die Spule kann durch Verleimung, Einbettung, Schweissen, Löten oder auf irgend eine andere geeignete Art am Gehäuse befestigt sein. Vorzugsweise ist die Spule vollständig in einer die Messkammer begrenzenden Gehäusewand eingebettet, so dass die der Messmembran zugewandte Spulenoberseite im wesentlichen koplanar zur der Messmembran zugewandten Oberfläche dieser Gehäusewand ist. Diese Ausführungsart der Erfindung erweist sich insbesondere beim Reinigen des Druckmessumformers als vorteilhaft.

Vorteilhafterweise ist die Messmembran derart in der durch das Gehäuse definierten Messkammer angeordnet, dass die Gehäusewände eine wirksame Überlastsicherung gegen mechanische Überbelastungen der Messmembran gewährleisten. Dies wird dadurch erreicht, dass der zur Messmembranebene vertikale Abstand zwischen der Messmembran und den die Messkammer begrenzenden Gehäusewänden möglichst klein gewählt wird. Bei einer Überbelastung der Messmembran aufgrund eines übermässig grossen Differenzdruckes steht dann die Messmembran an einer Gehäusewand an und wird durch diese gestützt, wodurch eine inelastische Dehnung der Messmembran vermieden wird.

Weiter wird bevorzugt, dass die Auslenkungssensoreinrichtung derart ausgebildet ist, dass eine berührungsfreie Messung (der Auslenkung der Messmembran aus ihrer Ruhelage) möglich ist. Grundsätzlich ist jedoch auch die Verwendung von anderen, nicht berührungsfreien Messverfahren und entsprechenden Sensoren möglich. Vorzugsweise erfolgen sowohl die Messung der Membranauslenkung als auch die Krafteinwirkung auf die Membran zur Kompensation der Druckkraft berührungsfrei, was bedeutet, dass sämtliche empfindlichen Komponenten grundsätzlich hinter einer Abschirmung angeordnet werden können, damit sie nicht in direkten Kontakt mit dem Medium kommen, dessen Differenzdruck zu messen ist.

Bei einer bevorzugten Ausführungsart der Erfindung sind die Spule und die Magnetmittel als integraler Teil der Auslenkungssensoreinrichtung ausgebildet. Zum Messen der Auslenkung der Messmembran aus ihrer Ruhelage wird ein durch die Bewegung der Magnetmittel mittels magnetischer Fernwirkung in der Spule erzeugtes elektrisches Signal gemessen. Bei dieser Ausführungsart der Erfindung hat somit die Anordnung aus Spule und Magnetmittel einerseits die Funktion einer Stellvorrichtung (bzw. eines Aktuators) für die Messmembran, indem sie über eine magnetische Kraft auf die Messmembran einwirkt, um sie entgegen der Druckkraft in ihre Ruhelage zurückzustellen. Andrerseits hat die Anordnung aus Spule und Magnetmittel auch die Funktion einer Auslenkungssensoreinrichtung bzw. eines Sensors zum Messen der Auslenkung der Messmembran aus ihrer Ruhelage. Der Sensor ist somit gleichzeitig auch ein Aktuator. Bei anderen Ausführungsarten der Erfindung können die Funktionen der Stellvorrichtung und der Auslenkungssensoreinrichtung jedoch auch von getrennten Vorrichtungen übernommen werden. So kann beispielsweise zur Messung der Auslenkung der Messmembran auch eine Hallsonde verwendet werden.

Vorzugsweise besteht die Messmembran im wesentlichen aus einem mechanisch weichen Material, das eine hohe Widerstandsfähigkeit gegen Korrosion aufweist. Vorzugsweise ist das Membranmaterial auch resistent gegen andere chemische Reaktionen, wenn es in Berührung mit chemisch reaktiven Medien kommt. Mögliche Materialien zur Herstellung der Messmembran sind Polytetrafluorethylen (PTFE, besser bekannt unter dem Markennamen Teflon), Ethylentetrafluorethylen (ETFE), Polyethylencotrifluorethylen (ECTFE), Perfluoraloxypolymere (PFA), Polyvinylidenfluorid (PVDF), Copolymere aus Tetrafluormethylen/Hexafluorpropylen (FEP), weitere fluorhaltige Kunststoffe, Polyethylen (PE), nicht rostender Stahl, Polyester usw.

Die Messmembran kann jedoch auch aus einem üblichen Membranmaterial gefertigt werden und mittels einer geeigneten Behandlung der Oberfläche gegen Korrosion und/oder andere chemische Reaktionen geschützt werden.

Die Magnetmittel sind vorzugsweise durch Einbettung in der Messmembran an letzterer befestigt. Die Verbindung zwischen den Magnetmitteln und der Messmembran kann jedoch auch durch Aufdampfen der Magnetmittel auf die Membran, durch Verkleben oder auf andere geeignete Art hergestellt werden.

Bei einer bevorzugten Ausführungsart der Erfindung sind die Magnetmittel im wesentlichen aus ferromagnetisch weichem Material gebildet. Bei vorgegebener Spulengeometrie, Spulenstrom und Abstand zwischen Spule und Magnetmitteln lassen sich damit die grössten Magnetkräfte zwischen dem Gehäuse und der Messmembran erzeugen. Zur Herstellung von Magnetmitteln gemäss dieser Ausführungsart der Erfindung geeignete ferromagnetisch weiche Materialien sind amorphe Metalle, Eisen-Nickel-Legierungen (wie sie z.B. unter dem Markennamen Permalloy vertrieben werden), Siliziumeisen, Eisen, Ferrite, Silizium-Eisen-Aluminium und weitere.

Bei einer anderen bevorzugten Ausführungsart der Erfindung bestehen die Magnetmittel aus ferromagnetisch hartem Material, also im wesentlichen aus Permanentmagneten. Die Gruppe der zur Herstellung von Magnetmitteln gemäss dieser Ausführungsform der Erfindung geeigneten Materialien umfasst Aluminium-Nickel, Aluminium-Nickel-Kobalt, seltene Erden, Neodym-Eisen-Bor, Neodym-Eisen-Kobalt, harte ferrite Magnete und weitere.

Bei einer nochmals anderen Variante der Erfindung sind die Magnetmittel aus elektrisch leitendem Material, vorzugsweise Gold oder Kupfer, hergestellt. Die Magnetmittel gemäss dieser Variante der Erfindung bestehen meistens nicht aus magnetischem Material, vielmehr wirkt das elektrisch leitende Material erst in Verbindung mit einem Wechselstrom als (Elektro)-Magnet. Die Magnetmittel können z.B. in Form einer kurzgeschlossenen flachen Spule oder in Form einer Platte aus elektrisch leitendem Material auf der Membran angeordnet sein. Bei dieser Ausführungsform der Erfindung wird in der am Gehäuse angeordneten Spule ein Wechselstrom erzeugt, welcher im Bereich der Messmembran ein zeitlich veränderliches Magnetfeld erzeugt. Dadurch wird in den (elektrisch leitenden) Magnetmitteln ein Strom induziert, so dass diese als Elektromagnet wirken und aufgrund des Magnetfeldes eine Kraft erfahren, welche durch die Verbindung der Magnetmittel mit der Messmembran auf letztere übertragen wird.

Vorzugsweise sind die Magnetmittel des erfindungsgemässen differentiellen Druckmessumformers bezüglich einer durch die Messmembran definierten Symmetrieebene im wesentlichen symmetrisch angeordnet. Dadurch wird die Entstehung von bezüglich dieser Symmetrieebene asymmetrischen Temperaturverteilungen vermindert. Solche asymmetrischen Temperaturverteilungen sind häufig die Ursache von Fehlern in der Druckmessung mittels differentiellen Druckmessumformern.

Bei einer weiteren bevorzugten Ausführungsart der Erfindung ist auf der bezüglich der Spule gegenüberliegenden Seite der Messmembran eine weitere stromleitende Spule am Gehäuse angeordnet. Die weitere Spule hat im wesentlichen die gleiche Funktion wie die erste Spule und wirkt mittels magnetischer Kraft mit den Magnetmitteln zusammen, um eine zwischen dem Gehäuse und der Messmembran wirkende Kraft zu erzeugen. Die mittels der weiteren Spule erzeugte Kraft zwischen dem Gehäuse und der Messmembran wirkt bezüglich der entsprechenden Kraft der ersten Spule im wesentlichen in entgegengesetzte Richtung. Mit dieser Anordnung können im Gegensatz zur Anordnung mit bloss einseitig bezüglich der Messmembran angeordneter Spule Auslenkungen der Messmembran in beide Richtungen senkrecht zur Messmembran kompensiert werden. Vorzugsweise sind die Spulen bezüglich einer durch die Messmembran in der Ruhelage definierten Symmetrieebene im wesentlichen symmetrisch angeordnet, um die Entstehung von Fehlern in der Druckmessung verursachenden asymmetrischen Temperaturverteilungen zu vermindern. Mit der symmetrischen Anordnung der Spulen beidseitig der Messmembran können zudem auch lageabhängige Fehler aktiv kompensiert werden, die selbst beim erfindungsgemässen Druckmessumformer aufgrund der Wirkung der Schwerkraft auf die Messmembran bei nicht vertikal angeordneter Messmembran noch vorhanden sind.

Bei einer bevorzugten Ausführungsart der Erfindung umfasst die Schaltungsvorrichtung zur Regelung der Spulenströme in zwei Spulen einen differentiellen Oszillator. Bei alternativen Ausführungsarten der Erfindung kann die Schaltungsvorrichtung zur Regelung des Stromes bzw. der Ströme in einer oder mehreren Spulen eine oder mehrere Brückenschaltungen umfassen.

Die nachfolgende detaillierte Beschreibung der vorliegenden Erfindung dient in Verbindung mit den beiliegenden Zeichnungen nur als Beispiel für ein besseres Verständnis der Erfindung und ist nicht als Einschränkung des Schutzbereichs der PatentanSprüche aufzufassen. Für den Fachmann sind aus der nachfolgenden Beschreibung in Verbindung mit den beiliegenden Zeichnungen und der Gesamtheit der Patentansprüche weitere vorteilhafte Ausführungsformen und Merkmalskombinationen ohne weiteres erkennbar, die jedoch immer noch innerhalb des Bereichs der vorliegenden Erfindung liegen.

### Kurze Beschreibung der Zeichnungen

Die Zeichnungen stellen bevorzugte Ausführungsformen der vorliegenden Erfindung dar. Es zeigen:
- Fig. 1: eine seitliche Schnittansicht einer ersten Ausführungsform eines differentiellen Druckmessumformers gemäss der Erfindung;
- Fig. 2: eine seitliche Schnittansicht einer zweiten Ausführungsform eines differentiellen Druckmessumformers gemäss der Erfindung;
- Fig. 3: eine seitliche Schnittansicht einer dritten Ausführungsform eines differentiellen Druckmessumformers gemäss der Erfindung;
- Fig. 4: eine seitliche Schnittansicht einer vierten Ausführungsform eines differentiellen Druckmessumformers gemäss der Erfindung;
- Fig. 5: ein Prinzipschaltbild der Schaltungsvorrichtung zur Regelung der Ströme in den Spulen des in Fig. 1 dargestellten Druckmessumformers.

Grundsätzlich sind in den Figuren gleiche Teile mit gleichen Bezugszeichen versehen.

### Wege zur Ausführung der Erfindung

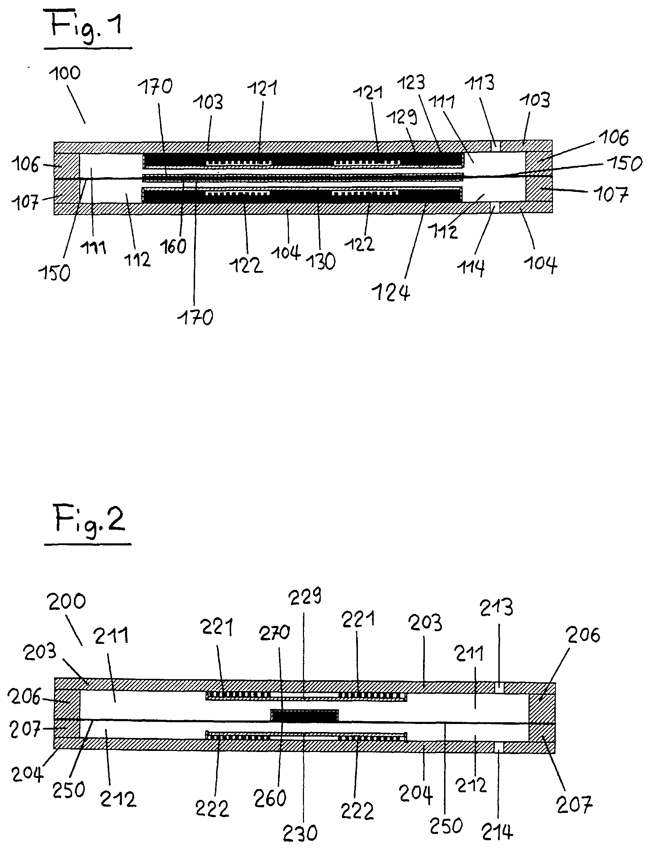

In der Figur 1 ist ein erfindungsgemässer differentiellen Druckmessumformer 100 gemäss einer ersten Ausführungsart der Erfindung in einer Schnittansicht von der Seite dargestellt.

Eine Messmembran 150 ist zwischen zwei ringförmigen Distanzstücken 106, 107 eingespannt. Bei den in den Figuren dargestellten Ausführungsarten der Erfindung ist die Messmembran 150 entlang ihres Umfanges mit den ringförmigen Distanzstücken 106, 107 verleimt und wird dadurch im wesentlichen in der Mitte zwischen den beiden ringförmigen Distanzstücken 106, 107 freihängend aufgespannt. Grundsätzlich können jedoch auch andere Befestigungsarten zur Befestigung der Membran 150 zwischen den Distanzstücken 106, 107 verwendet werden.

Die ringförmigen Distanzstücke 106, 107 sind je mit einer kreisförmigen Deckplatte 103, 104 derart verbunden, dass durch die Distanzstücke 106, 107 und die Deckplatten 103, 104 ein im wesentlichen (mit Ausnahme der Öffnungen 113, 114) geschlossenes zylinderförmiges Gehäuse mit kreisförmigem Querschnitt gebildet wird, wobei die Zylinderwand aus den ringförmigen Distanzstücken 106, 107, der Zylinderdeckel aus der einen kreisförmigen Deckplatte 103 und der Zylinderboden aus der anderen kreisförmigen Deckplatte 104 gebildet ist. Das Gehäuse definiert eine im wesentlichen (mit Ausnahme der Öffnungen 113, 114) geschlossene Messkammer, die durch die Messmembran 150 in einen ersten Messraum 111 und einen zweiten Messraum 112 unterteilt ist.

Bei der in der Figur 1 dargestellten Ausführungsform der Erfindung bestehen die das Gehäuse bildenden Distanzstücke 106, 107 und Deckplatten 103, 104 aus rostfreiem Stahl und die Messmembran 150 aus Polytetrafluorethylen (PTFE, besser bekannt unter dem Markennamen Teflon).

Der erste Messraum 111 ist mit einer ersten Öffnung 113 versehen, um einen Durchgang für ein unter einem ersten Messdruck stehendes Fluid von ausserhalb des Gehäuses zum ersten Messraum 111 zu schaffen, so dass der erste Messraum 111 mit dem ersten Messdruck beaufschlagt wird. Der zweite Messraum 112 ist mit einer zweiten Öffnung 114 versehen, um einen Durchgang für ein unter einem zweiten Messdruck stehendes Fluid von ausserhalb des Gehäuses zum zweiten Messraum 112 zu schaffen, so dass der zweite Messraum 112 mit dem zweiten Messdruck beaufschlagt wird. Die Messmembran 150 ist derart angeordnet, dass sie durch eine Druck-kraft des sich aus dem ersten Messdruck und dem zweiten Messdruck ergebenden Differenzdruckes eine Auslenkung aus ihrer in der Figur 1 dargestellten Ruhelage erfährt.

An der Innenseite des Gehäusedeckels 103 ist ein Spulenträger 123 in Form einer im wesentlichen kreisförmigen Scheibe angeordnet. Die Scheibe 123 ist auf ihrer der Messmembran 150 zugewandten Oberfläche mit einer ringförmigen Ausnehmung versehen, in welcher eine flache Spule 121 angeordnet ist. Bei der in der Figur 1 dargestellten Ausführungsform der Erfindung sind die Windungen der Spule 121 aus Gold gefertigt.

Der scheibenförmige Spulenträger 123 besteht vorzugsweise aus einem amorphen Metall, das z.B. aus der Gruppe von weichmagnetischen amorphen Legierungen ausgewählt sein kann, wie sie von der deutschen Firma "Vacuumschmelze GmbH" unter dem Markennamen Vitrovac vertrieben werden. Bei der in Figur 1 dargestellten Ausführungsart der Erfindung wurde die Legierung mit der Bezeichnung Vitrovac 6125 verwendet. Der Kern der Spule 121 wird durch das Zentrum des Spulenträgers 123 gebildet.

Zwischen der Spule 121 und dem Spulenträger 123 ist eine Schicht aus einem elektrisch isolierenden Material, z.B. aus Siliziumoxid, angeordnet.

Bei der in der Figur 1 dargestellten Ausführungsform der Erfindung ist die Spulenanordnung 121, 123 auf ihrer ganzen dem Medium im Messraum ausgesetzten Oberfläche mit einer Schutzschicht 129 versehen, um die Spulenanordnung 121, 123 gegen chemisch aggressive Medien zu schützen. Die Schutzschicht 129 besteht im dargestellten Ausführungsbeispiel aus einer perfluorierten Verbindung, wie sie üblicherweise im chemischen Apparatebau zur korrosionsfesten Auskleidung und Beschichtung von Behältern, Rohrleitungen, Pumpen usw. verwendet wird.

Es können jedoch auch andere geeignete (nicht ferromagnetische) Materialien zur Herstellung der Schutzschicht 129 verwendet werden, oder es kann - im Falle von chemisch nicht aggressiven Medien - auf jegliche Schutzschicht verzichtet werden.

Weiter ist bei der in Figur 1 dargestellten Ausführungsform der Erfindung an der Innenseite des Gehäusebodens 104 eine zur ersten Spulenanordnung 121, 123 analoge zweite Spulenanordnung 122, 124 angeordnet. Die einen Spulenträger 124 mit ringförmiger Ausnehmung, eine Spule 122, eine Isolationsschicht und eine Schutzschicht 130 umfassende zweite Spulenanordnung 122, 124 ist bezüglich einer durch die Messmembran 150 in der Ruhelage definierten Symmetrieebene im wesentlichen symmetrisch zur ersten Spulenanordnung 121, 123 angeordnet, um die Entstehung von asymmetrischen Temperaturverteilungen, die Fehler in der Druckmessung verursachen, zu vermindern.

Bei der in Figur 1 dargestellten Ausführungsform der Erfindung ist die Messmembran 150 mit einer die Magnetmittel bildenden Schicht aus ferromagnetischem Material 160 versehen. Die Schicht 160 ist bezüglich einer durch die Messmembran 150 definierten Symmetrieebene im wesentlichen symmetrisch angeordnet. Dadurch wird die Entstehung von bezüglich dieser Symmetrieebene asymmetrischen Temperaturverteilungen vermindert. Die durch die ferromagnetische Schicht 160 gebildeten Magnetmittel 160 sind auf ihren ganzen den Medien in den Messräumen 111, 112 ausgesetzten Oberflächen mit einer Schutzschicht 170 versehen, um die Magnetmittel 160 gegen chemisch aggressive Medien zu schützen. Die Magnetmittel-Schutzschicht 170 besteht im dargestellten Ausführungsbeispiel wiederum aus einer perfluorierten Verbindung, wie sie üblicherweise im chemischen Apparatebau zur korrosionsfesten Auskleidung und Beschichtung von Behältern, Rohrleitungen, Pumpen usw. verwendet wird.

Es können jedoch auch andere geeignete (nicht ferromagnetische) Materialien zur Herstellung der Schutzschicht 170 verwendet werden, oder es kann - im Falle von chemisch nicht aggressiven Medien - auf jegliche Schutzschicht verzichtet werden.

Die aus den Spulenanordnungen 121, 123, 122, 124 und den Magnetmitteln 160 gebildete Anordnung dient einerseits als Auslenkungssensoreinrichtung zum Messen einer Auslenkung der Messmembran 150 aus ihrer Ruhelage und zum Erzeugen eines Auslenkungssignals in Abhängigkeit dieser Auslenkung. Eine Änderung des sich aus dem ersten Messdruck und dem zweiten Messdruck ergebenden Differenzdruckes bewirkt eine Auslenkung der Messmembran 150 im wesentlichen senkrecht zur Ebene der Messmembran 150. Dabei werden die aus der ferromagnetischen Schicht gebildeten Magnetmittel 160 relativ bezüglich den Spulen 121, 122 bewegt und erzeugen - in Abhängigkeit der Auslenkung der Magnetmittel 160 bezüglich der Spulen 121, 122 - je einen Induktionsstrom in den beiden Spulen 121, 122. Diese Induktionsströme in den Spulen 121, 122 dienen als Auslenkungssignal der Auslenkungssensoreinrichtung, das an eine elektrische Schaltungsvorrichtung zur Steuerung bzw. Regelung des Druckmessumformers übertragen wird.

Andrerseits dient die aus den Spulenanordnungen 121, 123, 122, 124 und den Magnetmitteln 160 gebildete Anordnung als Stellvorrichtung (bzw. Aktuator) für die Messmembran 150, indem sie über eine magnetische Kraft auf die Messmembran 150 einwirkt, um sie entgegen der Druckkraft in ihre Ruhelage zurückzustellen. Die Schaltungsvorrichtung ist elektrisch mit den Spulen 121, 122 verbunden. Aufgrund des gemessenen Auslenkungssignals erzeugt die Schaltungsvorrichtung je einen Strom in den Spulen 121, 122. Die Spulenströme sind derart bemessen, dass die Spulen 121, 122 mittels magnetischer Kraft derart mit den Magnetmitteln 160 an der Messmembran 150 zusammenwirken, dass die magnetische Gesamtkraft die auf die Messmembran 150 wirkende Druckkraft im wesentlichen kompensiert, um die Auslenkung der Messmembran 150 aus ihrer Ruhelage rückgängig zu machen. Die Spulenströme zur Erzeugung der magnetischen Kompensationskraft stellen ein Mass für den Differenzdruck dar und werden als Ausgangsgrösse des Druckmessumformers 100 ausgegeben.

Bei den in den Figuren dargestellten Ausführungsformen der Erfindung weisen die flachen Spulen 121, 122 einen Durchmesser von ungefähr 11 mm auf. Die Windungen sind aus Gold gefertigt und der Windungsdraht hat einen Durchmesser von ungefähr 50 µm. Die Dicke der in den Figuren 1 bis 4 dargestellten Druckmessumformer 100; 200; 300; 400 beträgt ungefähr 1 mm. Es versteht sich von selbst, dass auch anders bemessene Druckmessumformer herstellbar sind, ohne vom Schutzbereich der Erfindung abzuweichen, wie er im unabhängigen Patentanspruch definiert wird.

In der Figur 2 ist ein erfindungsgemässer differentiellen Druckmessumformer 200 gemäss einer zweiten Ausführungsform der Erfindung in einer Schnittansicht von der Seite dargestellt. Das die Distanzstücke 206, 207, die Deckplatten 203, 204 und die Öffnungen 213, 214 umfassende Gehäuse mit der durch die Messmembran 250 in zwei Messräume 211, 212 unterteilten Messkammer entspricht in Funktion und Form im wesentlichen dem in der Figur 1 dargestellten Gehäuse.

Bei der in Figur 2 dargestellten Ausführungsform der Erfindung sind die flachen Spulen 221, 222 aus Gold direkt an den Innenseiten der Gehäusedeckel 203, 204 angeordnet. Dies stellt einen ersten Unterschied zu der in Figur 1 dargestellten Ausführungsform der Erfindung dar. Die Spulen 221, 222 sind wiederum auf ihren ganzen dem Medium in den Messräumen 211, 212 ausgesetzten Oberflächen mit einer Schutzschicht 229, 230 versehen, um sie gegen chemisch aggressive Medien zu schützen.

Die Ausführungsform der Figur 2 unterscheidet sich hinsichtlich der an der Messmembran 250 angeordneten Magnetmittel 260 wesentlich von der Ausführungsform der Figur 1. Sei der in Figur 2 dargestellten Ausführungsform der Erfindung werden die Magnetmittel 260 durch einen an der Messmembran 250 angeordneten Permanentmagneten 260 aus magnetisch hartem Material gebildet. Die elektromagnetische Wechselwirkung zum Messen der Auslenkung und zum Erzeugen einer magnetischen Kompensationskraft findet somit zwischen dem Permanentmagneten 260 und den Spulen 221, 222 statt. Die aus den Spulenanordnungen 221, 222 und den Magnetmitteln 260 gebildete Anordnung dient wiederum einerseits als Auslenkungssensoreinrichtung zum Messen einer Auslenkung der Messmembran 250 aus ihrer Ruhelage und zum Erzeugen eines Auslenkungssignals in Abhängigkeit dieser Auslenkung, sowie andrerseits als Stellvorrichtung bzw. Aktuator für die Messmembran 250.

Die den Medien in den Messräumen ausgesetzten Oberflächen des Permanentmagneten sind wiederum mit einer Magnetmittel-Schutzschicht versehen, um den Permanentmagneten gegen chemisch aggressive Medien zu schützen.

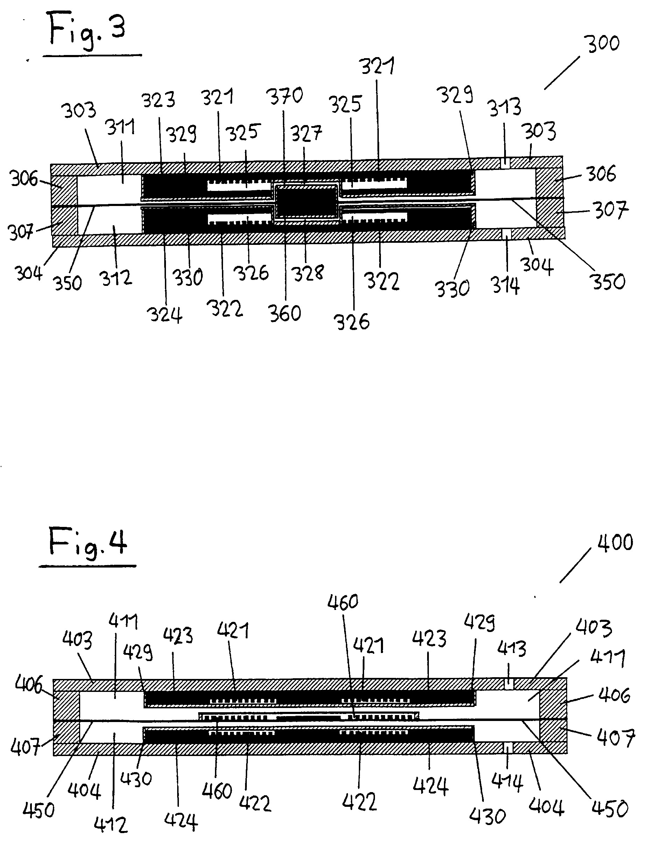

Während bei der in Figur 2 dargestellten Ausführungsform der Erfindung die Magnetmittel 260 aus permanentmagnetischem Material bezüglich der Messmembran 250 nicht symmetrisch angeordnet sind, ist bei der in Figur 3 dargestellten Ausführungsform der Erfindung der die Magnetmittel 360 bildende Permanentmagnet 360 bezüglich einer durch die Messmembran 350 definierten Symmetrieebene im wesentlichen symmetrisch angeordnet. Des weiteren sind im Unterschied zur Anordnung nach Figur 2 bei der in Figur 3 dargestellten Ausführungsform der Erfindung die flachen Spulen 321, 322 je in einer tunnelartigen Ausnehmung 325, 326 der Spulenträger 323, 324 angeordnet, die ihrerseits an den Innenseiten des Gehäusedeckels 303 bzw. des Gehäusebodens 304 angebracht sind. Die im wesentlichen kreisscheibenförmigen Spulenträger 323, 324 weisen in ihrem Zentrum je eine Vertiefung 327, 328 zur teilweisen Aufnahme des Permanentmagneten 360 auf. Durch diese Anordnung sind im Vergleich zur der in Figur 2 dargestellten Anordnung grössere Magnetkräfte zwischen den Spulen 321, 322 und dem Permanentmagneten 360 erreichbar.

Im übrigen sind die in den Figuren 2 und 3 dargestellten Ausführungsformen der Erfindung im wesentlichen gleich: die elektromagnetische Wechselwirkung zum Messen der Auslenkung und zum Erzeugen einer magnetischen Kompensationskraft wird in beiden Fällen durch das Zusammenwirken eines an der Messmembran 250; 350 angeordneten Permanentmagneten 260; 360 mit den am Gehäuse angeordneten Spulen 221, 222; 321, 322 verursacht.

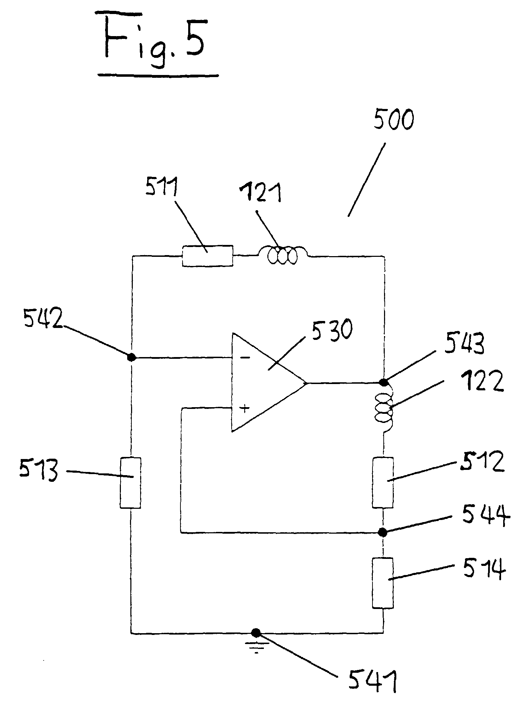

Bei der in Figur 4 dargestellten Ausführungsform der Erfindung sind das Gehäuse 403, 404, 406, 407 und die Spulenanordnungen 421, 423, 422, 424 identisch zu der in Figur 1 dargestellten Ausführungsform der Erfindung ausgebildet. Die Magnetmittel 460 werden bei der Ausführungsform nach Figur 4 jedoch durch eine an der Messmembran 450 angeordnete, kurzgeschlossene flache Spule 460 gebildet. Die elektrisch leitende Spule 460 ist wiederum aus Gold gefertigt. Während bei der in Figur 4 dargestellten Ausführungsart der Erfindung die Spule 460 bezüglich der Messmembran 450 nicht symmetrisch, sondern auf einer Seite der Messmembran 450 angeordnet ist, kann bei einer alternativen Ausführungsart der Erfindung auf der anderen Seite der Messmembran eine weitere Spule angeordnet sein, um symmetrische Magnetmittel bezüglich der Messmembran 450 zu schaffen.

Bei der in Figur 4 dargestellten Ausführungsform der Erfindung wird in den am Gehäuse angeordneten Spulen 421, 422 ein Wechselstrom erzeugt, welcher im Bereich der Messmembran 450 ein zeitlich veränderliches Magnetfeld erzeugt. Dadurch werden in den (elektrisch leitenden) Magnetmitteln 460 Ströme induziert (englisch "eddy current"), so dass die Magnetmittel 460 als Elektromagnet wirken und aufgrund des Magnetfeldes eine Kraft erfahren, welche durch die Verbindung der Magnetmittel 460 mit der Messmembran 450 auf letztere übertragen wird. Bei einer anderen Variante dieser Ausführungsform der Erfindung ist die kurzgeschlossene flache Spule 460 an der Messmembran 450 durch eine Platte aus elektrisch leitendem Material ersetzt.

Die elektromagnetische Wechselwirkung zum Messen der Auslenkung und zum Erzeugen einer magnetischen Kompensationskraft basiert bei der in Figur 4 dargestellten Ausführungsform der Erfindung auf der Wechselwirkung zwischen den am Gehäuse angeordneten Spulen 421, 422, die einen Wechselstrom führen, und den an der Messmembran 450 angeordneten Magnetmitteln 460 aus elektrisch leitendem Material, die im durch den Wechselstrom in den Spulen 421, 422 erzeugten Magnetfeld als Elektromagnet wirken.

Bei den in den Figuren 1 bis 4 dargestellten Ausführungsarten der Erfindung umfasst die Schaltungsvorrichtung zur Regelung der Spulenströme einen differentiellen Oszillator. In der Figur 5 ist das Prinzipschaltbild des Oszillators 500 dargestellt, der zur Regelung der Spulenströme in den Spulen 121 und 122 des in der Figur 1 dargestellten differentiellen Druckmessumformers 100 dient.

Der invertierende Eingang 542 eines Operationsverstärkers 530 ist in serieller Anordnung über den Widerstand 511 mit dem einen Anschluss der Spule 121 des Druckmessumformers 100 verbunden. Der andere Anschluss der Spule 121 ist mit dem Ausgang 543 des Operationsverstärkers 530 verbunden. Weiter ist der invertierende Eingang 542 über den Widerstand 513 mit der Masse 541 verbunden. Der nicht invertierende Eingang 544 des Operationsverstärkers 530 ist einerseits in serieller Anordnung über den Widerstand 512 mit dem einen Anschluss der Spule 122 des Druckmessumformers 100 verbunden. Der andere Anschluss der Spule 122 ist mit dem Ausgang 543 des Operationsverstärkers 530 verbunden. Andrerseits ist der nicht invertierende Eingang 544 des Operationsverstärkers 530 auch über den Widerstand 514 mit der Masse 541 verbunden. Die Frequenz des elektrischen Signals beim Punkt 543 stellt ein Mass für den durch den differentiellen Druckmessumformer 100 gemessenen Differenzdruck dar und wird als Ausgangsgrösse des Druckmessumformers 100 ausgegeben.

Zusammenfassend ist festzustellen, dass durch die Erfindung ein differentieller Druckmessumformer bereitgestellt wird, der eine einfache Konstruktion aufweist, kostengünstig in Grossserie hergestellt werden kann, eine lange Lebensdauer gewährleistet und in bezüglich Korrosion und Temperatur rauhen Umgebungsbedingungen einsetzbar ist.

## Patentansprüche

1. Differentieller Druckmessumformer (100; 200; 300; 400), gekennzeichnet durch eine im wesentlichen mikrotechnische Struktur mit einer durch ein Gehäuse definierten Messkammer, die durch eine mit Magnetmitteln (160; 260; 360; 460) versehene Messmembran (150; 250; 350; 450) in einen mit einem ersten Messdruck beaufschlagbaren ersten Messraum (111; 211; 311; 411) und einen mit einem zweiten Messdruck beaufschlagbaren zweiten Messraum (112; 212; 312; 412) unterteilt ist, wobei die Messmembran (150; 250; 350; 450) derart angeordnet ist, dass eine Druckkraft des sich aus dem ersten Messdruck und dem zweiten Messdruck ergebenden Differenzdruckes eine Auslenkung der Messmembran (150; 250; 350; 450) aus ihrer Ruhelage bewirkt, einer am Gehäuse angeordneten stromleitenden Spule (121; 221; 321; 421), die mittels magnetischer Kraft mit den Magnetmitteln (160; 260; 360; 460) zusammenwirkt, um eine zwischen dem Gehäuse und der Messmembran (150; 250; 350; 450) wirkende Kraft zu erzeugen, einer Auslenkungssensoreinrichtung zum Messen einer Auslenkung der Messmembran (150; 250; 350; 450) aus ihrer Ruhelage und zum Erzeugen eines Auslenkungssignals in Abhängigkeit dieser Auslenkung, und einer elektrischen Schaltungsvorrichtung zur Erzeugung eines Spulenstroms in Abhängigkeit des Auslenkungssignals derart, dass die über die Spule (121; 221; 321; 421) und die Magnetmittel (160; 260; 360; 460) auf die Messmembran (150; 250; 350; 450) wirkende Kraft die auf die Messmembran (150; 250; 350; 450) wirkende Druckkraft im wesentlichen kompensiert, wobei der Spulenstrom ein Mass für den Differenzdruck darstellt und als Ausgangsgrösse des Druckmessumformers (100; 200; 300; 400) ausgegeben wird.

2. Differentieller Druckmessumformer (100; 200; 300; 400) nach Anspruch 1, dadurch gekennzeichnet, dass das Gehäuse, die Spule (121; 221; 321; 421), die Magnetmittel (160; 260; 360; 460) und die Messmembran (150; 250; 350; 450) zur berührungsfreien Kraftausübung zwischen dem Gehäuse und der Messmembran (150; 250; 350; 450) mittels magnetischer Fernwirkung ausgebildet sind.

3. Differentieller Druckmessumformer (100; 200; 300; 400) nach Anspruch 1 oder 2, dadurch gekennzeichnet, dass die Auslenkungssensoreinrichtung zur berührungsfreien Messung der Auslenkung der Messmembran (150; 250; 350; 450) aus ihrer Ruhelage ausgebildet ist.

4. Differentieller Druckmessumformer (100; 200; 300; 400) nach einem der Ansprüche 1 bis 3, dadurch gekennzeichnet, dass die Spule (121; 221; 321; 421) und die Magnetmittel (160; 260; 360; 460) als integraler Teil der Auslenkungssensoreinrichtung ausgebildet sind und zum Messen der Auslenkung der Messmembran (150; 250; 350; 450) aus ihrer Ruhelage ein durch die Bewegung der Magnetmittel (160; 260; 360; 460) mittels magnetischer Fernwirkung in der Spule (121; 221; 321; 421) erzeugtes elektrisches Signal gemessen wird.

5. Differentieller Druckmessumformer (100; 200; 300; 400) nach einem der Ansprüche 1 bis 4, dadurch gekennzeichnet, dass die Messmembran (150; 250; 350; 450) im wesentlichen aus einem mechanisch weichen Material besteht, das eine hohe Widerstandsfähigkeit gegen Korrosion aufweist und aus der durch die Materialien Polytetrafluorethylen (PTFE), Ethylentetrafluorethylen (ETFE), Polyethylencotrifluorethylen (ECTFE), Perfluoraloxypolymere (PFA), Polyvinylidenfluorid (PVDF), Copolymere aus Tetrafluormethylen/Hexafluorpropylen (FEP), Polyethylen (PE), rostfreier Stahl, Polyester gebildeten Gruppe ausgewählt ist.

6. Differentieller Druckmessumformer (100) nach einem der Ansprüche 1 bis 5, dadurch gekennzeichnet, dass die Magnetmittel (160) Mittel umfassen, die aus ferromagnetisch weichem Material gebildet sind.

7. Differentieller Druckmessumformer (200; 300) nach einem der Ansprüche 1 bis 6, dadurch gekennzeichnet, dass die Magnetmittel (260; 360) permanentmagnetische Mittel (260; 360) aus ferromagnetisch hartem Material umfassen.

8. Differentieller Druckmessumformer (400) nach einem der Ansprüche 1 bis 7, dadurch gekennzeichnet, dass die Magnetmittel (460) Mittel aus elektrisch leitendem Material umfassen, die in einem zeitlich veränderlichen Magnetfeld als Elektromagnet wirken.

9. Differentieller Druckmessumformer (100; 300) nach einem der Ansprüche 1 bis 8, dadurch gekennzeichnet, dass die Magnetmittel (160; 360) bezüglich einer durch die Messmembran (150; 350) definierten Symmetrieebene im wesentlichen symmetrisch angeordnet sind, um die Entstehung von Fehler in der Druckmessung verursachenden asymmetrischen Temperaturverteilungen zu vermindern.

10. Differentieller Druckmessumformer (100; 200; 300; 400) nach einem der Ansprüche 1 bis 9, dadurch gekennzeichnet, dass auf der bezüglich der Spule (121; 221; 321; 421) gegenüberliegenden Seite der Messmembran (150; 250; 350; 450) eine weitere stromleitende Spule (122; 222; 322; 422) am Gehäuse angeordnet ist, die mittels magnetischer Kraft mit den Magnetmitteln (160; 260; 360; 460) zusammenwirkt, um eine zwischen dem Gehäuse und der Messmembran (150; 250; 350; 450) wirkende Kraft zu erzeugen.

11. Differentieller Druckmessumformer (100; 200; 300; 400) nach Anspruch 10, dadurch gekennzeichnet, dass die Spulen (121, 122; 221, 222; 321, 322; 421, 422) bezüglich einer durch die Messmembran (150; 250; 350; 450) in der Ruhelage definierten Symmetrieebene im wesentlichen symmetrisch angeordnet sind, um die Entstehung von Fehler in der Druckmessung verursachenden asymmetrischen Temperaturverteilungen zu vermindern.

12. Differentieller Druckmessumformer (100; 200; 300; 400) nach einem der Ansprüche 1 bis 11, dadurch gekennzeichnet, dass die Schaltungsvorrichtung zur Regelung des Spulenstroms einen differentiellen Oszillator (500) umfasst.
